**Europäisches Patentamt**

**European Patent Office**

**Office européen des brevets**

(19)

(11) Veröffentlichungsnummer: **0 234 215**
**B1**

(12) **EUROPÄISCHE PATENTSCHRIFT**

(45) Veröffentlichungstag der Patentschrift:
14.03.90

(51) Int. Cl.⁴: **B27B 5/29**

(21) Anmeldenummer: **87100368.7**

(22) Anmeldetag: **14.01.87**

---

(54) **Rasteinrichtung für eine Tisch- und Gehrungssäge.**

---

(30) Priorität: **28.02.86 DE 3606524**

(43) Veröffentlichungstag der Anmeldung:
**02.09.87 Patentblatt 87/36**

(45) Bekanntmachung des Hinweises auf die Patenterteilung:
**14.03.90 Patentblatt 90/11**

(84) Benannte Vertragsstaaten:
**DE ES FR GB IT**

(56) Entgegenhaltungen:
**DE-A- 1 628 992**

(73) Patentinhaber: **Black & Decker Overseas AG,
Staedtle 36, FL-9490 Vaduz(LI)**

(72) Erfinder: **Bergler, Otto, Jahnstrasse 18/1,
D-7130 Mphlacker-Lomersheim(DE)**

(74) Vertreter: **Wilhelm, Hans-Herbert, Dr.-Ing. et al, Wilhelm
& Dauster Patentanwälte Hospitalstrasse 8,
D-7000 Stuttgart 1(DE)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Rasteinrichtung für eine Tisch- und Gehrungssäge nach dem Oberbegriff des Patentanspruches 1.

Rasteinrichtungen dieser Art sind bekannt (DE-PS 16 28 992). Dort ist jeweils ein Arretierungsbolzen vorgesehen, der an den seitlichen Tragwangen eines Ständers für den wendbaren Arbeitstisch gelagert ist und jeweils, je nach Lage des Arbeitstisches, mit einer Lasche am Rand des Arbeitstisches sperrend zusammenwirkt. Dieser Arretierungsbolzen wird in der Praxis mit Anlaufschrägen für beide Schwenkrichtungen versehen.

Nachteilig ist, daß sich solche federnd gelagerten Arretierungsbolzen nicht oder nur sehr schwer aufgrund ihrer Anlaufschrägen von der sich bewegenden Arbeitstischplatte beiseite drücken lassen. Insbesondere bei längerem Arbeitseinsatz oder durch Verschmutzung können hier Störungen auftreten, die in der Praxis nur jeweils durch eine Handbetätigung des Arretierbolzens überwunden werden können. Diese Arbeitsweise ist für die Bedienungsperson lästig.

Der Erfindung liegt daher die Aufgabe zugrunde, eine Rasteinrichtung für solche wendbaren Arbeitstische so auszubilden, daß sie selbstrastend wirken, dennoch aber eine sichere Arbeitsweise erlauben und ein Überschwenken des Arbeitstisches verhindern.

Zur Lösung dieser Aufgabe werden bei einer Rasteinrichtung der eingangs genannten Art die kennzeichnenden Merkmale des Patentanspruches 1 vorgesehen. Durch diese Ausgestaltung wird jeweils ein erster von dem sich einschwenkenden Arbeitstisch betätigter Rastteil gebildet, der beim Einschwenken zurückweicht, während ein zweiter Klinkenteil für einen einwandfreien Anschlag des Arbeitstisches sorgt und so ein Überschwenken sicher verhindert, ehe der dann zurückschwenkende erste Klinkenteil die Verrastung bewirkt. Die Ausgestaltung ist dabei so getroffen, daß nach dem Lösen der Verrastung und beim Zurückschwenken des Arbeitstisches in der anderen Richtung jeweils der vorher zurückgedrückte erste Rastteil als Festanschlag wirkt, während der zweite Klinkenteil vom Arbeitstisch aus seiner Raststellung zurückgedrückt wird.

Eine besonders einfache und vorteilhafte Ausgestaltung ist durch die Merkmale des Anspruches 2 gegeben. Dort wird das Rastelement aus zwei unabhängig voneinander schwenkbaren Hebeln gebildet, die beide federnd an einer gemeinsamen Achse gelagert sind. Die Ausgestaltung kann dabei so getroffen werden, daß die Rastnut jeweils in größtmöglichem Abstand zur Schwenkachse der beiden Schwenkhebel vorgesehen wird, so daß eine besonders gute Betätigung der Schwenkhebel durch die Anlaufschrägen gegen geringen Widerstand möglich ist. Die jeweils federbelasteten Rastklinken rasten bei beiden Schwenkrichtungen, also sowohl im Uhrzeigersinn als im Gegenuhrzeigersinn, automatisch ein, wobei jeweils die zweite Rastklinke als Anschlag wirkt. Nur zum Ausrasten muß, wie bei den bekannten Bauarten, ein Zugbolzen betätigt werden, der bei der neuen Ausführung aber auch durch einen Exzenterhebel ersetzt werden kann, der es dann auch ermöglicht, die Betätigung von der Vorderseite des Aggregates vorzunehmen.

Zweckmäßig greift das Betätigungsorgan nach Anspruch 6 so in die beiden Schwenkhebel ein, daß ein gewisser Federweg gewährleistet ist, so daß die selbstrastende Bewegung beider Schwenkhebel nicht beeinträchtigt wird.

Weitere Vorteile und Merkmale ergeben sich aus den Unteransprüchen sowie aus der nachfolgenden Beschreibung von zwei Ausführungsbeispielen der Erfindung, die in der Zeichnung dargestellt sind. Es zeigen:

Fig. 1 einen schematischen Teilschnitt durch den Seitenbereich einer Tisch- und Gehrungssäge mit einem schwenkbaren Arbeitstisch und mit einer erfindungsgemäßen Rasteinrichtung für den Arbeitstisch,

Fig. 2 die Stirnansicht der Rasteinrichtung der Fig. 1,

Fig. 3 einen Teilschnitt, ähnlich Fig. 1, jedoch in der Stellung, in der der Arbeitstisch von der anderen Schwenkrichtung her auf die Rasteinrichtung trifft,

Fig. 4 und 5 jeweils Ausführungsformen von zwei einander zuzuordnenden Schwenkhebeln, wie sie als Rasteinrichtung für die Ausführungsform der Fig. 6 und 7 vorgesehen sind,

Fig. 6 einen Teilschnitt, ähnlich Fig. 1, jedoch mit einem Exzenterhebel als Betätigungsorgan zum Ausrasten und mit nur schematisch angedeuteten Schwenkhebeln und

Fig. 7 die Frontansicht der Rasteinrichtung der Fig. 6 in Richtung des Pfeiles VII.

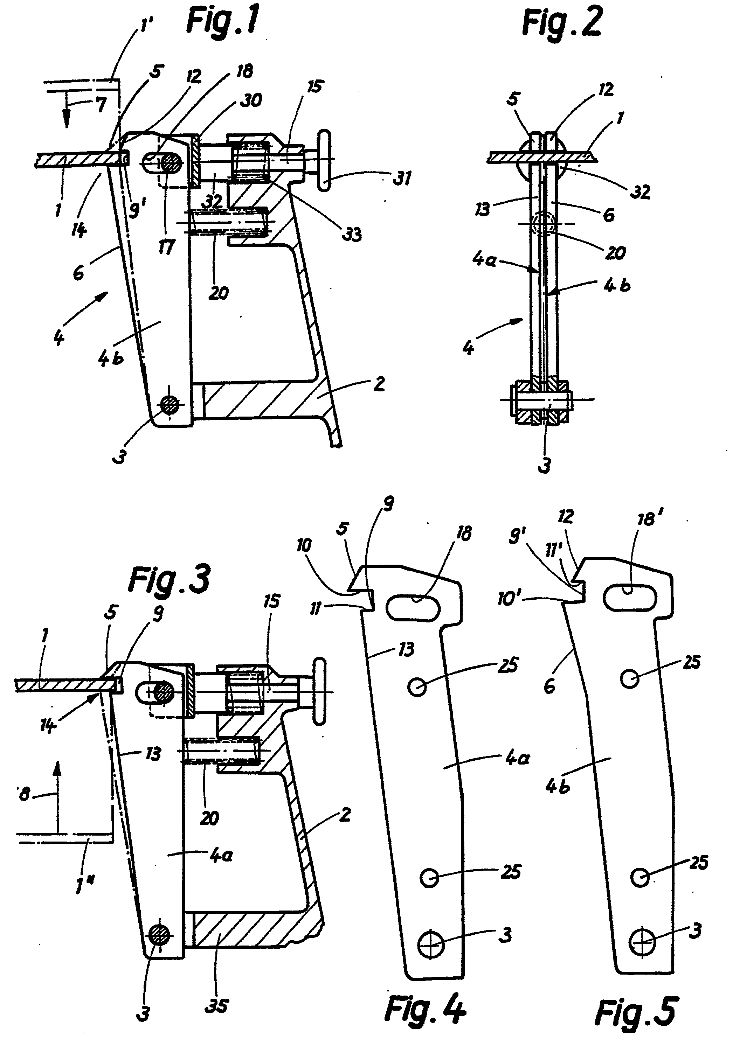

In den Fig. 1 und 2 ist eine Rastklinke (4) im seitlichen Innenbereich einer der Seitenwände des Traggestelles (2) für eine kombinierte Tisch- und Gehrungssäge gelagert. Der Aufbau der Tisch- und Gehrungssäge ist bekannt (s. zum Beispiel DE-PS 16 28 992) und ist im einzelnen nicht beschrieben. Der Schwenktisch (1), dessen Rastkante (14) zu sehen ist, wird in der Fig. 1 um eine in der Zeichenebene verlaufende Achse geschwenkt und sein einrastender Teil kommt in Fig 1 aus der Lage (1') auf die Rastklinke (4) zu, ehe die Endlage bei (1) eingenommen wird.

Die Rastklinke (4) besteht, wie insbesondere aus Fig. 2 erkennbar ist, aus zwei parallel zueinander an dem Schwenkbolzen (3) gelagerten Schwenkhebeln (4a, 4b), die beide in ihrem oberen Bereich Langlöcher (18) aufweisen, durch die ein Bolzen (17) greift, der seinerseits mit einer Gabel (30) und einer Zugstange (15) mit einem Betätigungsgriff (31) in Verbindung steht. Die Zugstange (15) weist einen kolbenartigen Führungsteil (32) auf, der unter der Wirkung einer Feder (33) in Richtung zum Bolzen (17) gedrückt wird. Beide Schwenkhebel (4a, 4b) sind in nicht näher dargestellter Weise durch eine oder durch zwei Federn (20) am Traggestell (2) abgestützt, die auf die Schwenkhebel ein Drehmoment im Gegenuhrzeigersinn ausübt.

Die in den Fig. 4 und 5 gezeigten Schwenkhebel entsprechen in ihrer äußeren Form nicht den nur schematisch dargestellten Schwenkhebeln der Fig. 1 bis 3 oder 6 und 7. Da sie aber bei allen Ausführungsformen in gleicher Weise eingesetzt werden können, sind in den Fig. 4 und 5 auch die gleichen Bezugzeichen wie in den anderen Figuren verwendet.

Dadurch wird deutlich, daß die beiden Schwenkhebel die gleiche Länge aufweisen und auf einem etwa gleichen Schwenkradius zur Schwenkachse (3) jeweils mit einer Nut (9) bzw. (9') versehen sind, die aber bei beiden Schwenkhebeln (4a) bzw. (4b) unterschiedliche Begrenzungswände aufweist. An der vergrößerten Darstellung der Nut und der angrenzenden Bereiche in den Fig. 4 und 5 soll daher die Wirkungsweise der in diesen Bereichen gleich ausgebildeten Schwenkhebel (4a, 4b) in ihrer Einbaulage nach den Fig. 1 bis 3 erläutert werden.

Wie aus der Fig. 1 und 5 zu erkennen ist, weist der Schwenkhebel (4b) eine Nut (9') auf, deren längere Begrenzungswand (10') unten gelegen ist, während die kürzere Begrenzungswand (11') oben liegt. Angrenzend an das Ende der Begrenzungswand (10') beginnt eine Auflaufschräge (6) des Schwenkhebels (4b), die, wie Fig. 1 zu entnehmen ist, in Form der Begrenzungswand (10') einen Anschlag für die sich in Richtung des Pfeiles (7) in die Raststellung bewegende Rastkante (14) des Arbeitstisches (1) bildet. Bei dieser Bewegung läuft daher die Rastkante (14) des Arbeitstisches (1) an der Anlaufschräge (5) des Schwenkhebels (4a) auf, die bei diesem Schwenkhebel in die daran angrenzende längere Begrenzungswand (10) der Nut (9) übergeht. Bei der Schwenkbewegung des Arbeitstisches (1) im Sinne des Pfeiles (7) wird daher der Schwenkhebel (4a) im Uhrzeigersinn weggeschwenkt werden, was aufgrund der Anordnung des Bolzens (17) in dem Langloch (18) ohne weiteres gegen die Kraft der Feder (20) möglich ist. Der Schwenkhebel (4b) dagegen wird bei dieser Schwenkbewegung des Arbeitstisches nicht zur Seite geschwenkt, denn die Rastkante (14) des Arbeitstisches (1) läuft auf dessen längere Begrenzungswand (10') auf, die somit einen Anschlag für den Arbeitstisch (1) bildet. Ist der Arbeitstisch (1) an diesen Anschlag angefahren, wird der zweite Schwenkhebel (4a), dessen Anlaufschräge (5) nun hinter der Rastkante (14) liegt, wieder im Gegenuhrzeigersinn durch die Wirkung der Feder (20) zurückgedrückt, so daß der Arbeitstisch (1) nun in der Nut (9') und in der Nut (9) von beiden Rasthebeln (4a) und (4b) formschlüssig gehalten ist. Zum Lösen dieser Rastung muß der Handgriff (31) gezogen werden, so daß über den Bolzen (17) beide Schwenkhebel aus ihrer Raststellung im Uhrzeigersinn nach außen geschwenkt werden. Um diese Schwenkbewegung zu ermöglichen, sind die Begrenzungswände (10, 11) bzw. (10', 11') nicht exakt parallel zueinander, sondern leicht konisch zum Boden der Nuten (9, 9') hin zusammenlaufend ausgebildet.

Wird nach dem Lösen der Rastung der Tisch in der anderen Richtung verschwenkt, so kommt er gemäß Fig. 3 aus der Stellung (1'') in der Richtung des Pfeiles (8) wieder auf die Rasteinrichtung zu. In diesem Fall wird nun der Schwenkhebel (4b) zur Seite gedrückt, weil die Rastkante (14) des Arbeitstisches (1) an seiner Anlaufschräge (6) anläuft und ihn im Uhrzeigersinn gegen die Wirkung der Feder (20) nach rechts verschwenkt. Der Schwenkhebel (4a) dagegen bleibt in seiner Ausgangsstellung stehen, so daß seine längere Begrenzunswand (10) als Anschlag für die Rastkante (14) des Arbeitstisches (1) dient. Nach dem Anschlagen an dieser Kante rastet der Schwenkhebel (4b) ebenfalls in seine Ausgangslage zurück. Der Arbeitstisch ist erneut in seiner Stellung gesichert. Für beide Schwenkbewegungen des Arbeitstisches bietet die neue Rasteinrichtung daher die Sicherheit, daß ein Überdrehen des Schwenktisches vermieden wird und daß ein automatisches Einrasten ohne Handbetätigung möglich wird.

Zu ergänzen ist, daß die Schwenkachse (3) der beiden Schwenkhebel (4a) und (4b) an einem Gehäusevorsprung (35) des Traggestelles (2) ortsfest gelagert ist.

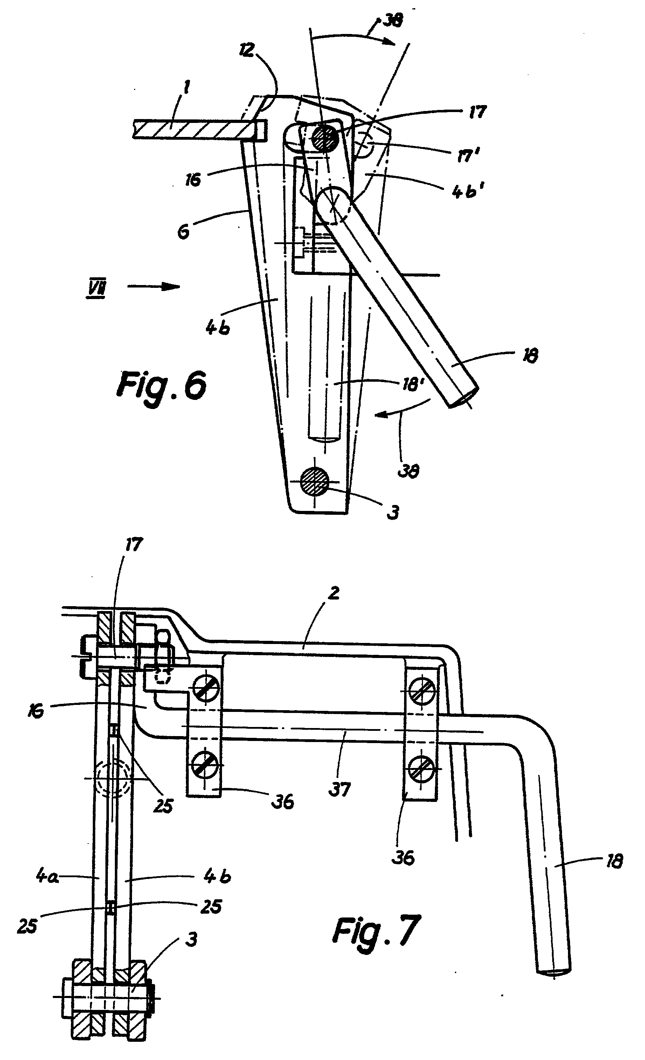

Die Schwenkhebel (4a) und (4b) der Ausführungsform in den Fig. 6 und 7 entsprechen den Schwenkhebeln der Fig. 4 und 5. Auch in den Fig. 6 und 7 sind die Schwenkhebel nur schematisch angedeutet. Die Wirkungsweise der Schwenkhebel beim Ein- und Ausrasten entspricht jener der Ausführungsform der Fig. 1 bis 3.

Im Unterschied zu der Ausführungsform nach den Fig. 1 bis 3 wird bei der Ausführungsform der Fig. 6 und 7 die Ausrastbewegung der beiden Schwenkhebel (4a) und (4b) jedoch nicht über eine Zugstange, sondern über einen Exzenterhebel (16) bewirkt, der als ein doppelt gekröpfter Hebel aus einem Stangenmaterial ausgebildet sein kann und der in zwei am Traggestell (2) angeordneten Lagerlaschen (36) schwenkbar befestigt ist. Der Exzenterhebel (16) weist daher einen zur Lagerung dienenden etwa horizontal verlaufenden Mittelteil (37) und einen von diesem Mittelteil nach oben abgekröpften Exzenterhebel (16) auf, der an dem Bolzen (17) angreift. Am anderen Ende besitzt der Exzenterhebel (16) einen Handgriff (18), der bei dieser Ausführungsform im selben Sinn zur Entrastung verschwenkbar ist, wie die Schwenkhebel (4a) und (4b). Dies ist in Fig. 6 durch die beiden Pfeile (38) angedeutet. Bei dieser Schwenkbetätigung erreicht der Handgriff die Endlage (18'), der Bolzen die Endlage (17') und der Schwenkhebel die Lage (4b'), in der der Arbeitstisch (1) freigegeben ist.

Wie aus den Fig. 4 bis 7 außerdem hervorgeht, sind die beiden Schwenkhebel (4a) und (4b) jeweils mit noppenförmigen Ausprägungen (25) versehen, die sich bei der Montage beider Schwenkhebel an der Schwenkachse (3) und am Bolzen (17) aneinanderlegen und so den gegenseitigen Abstand halten. Die Noppen (25) müssen so ausgelegt werden, daß sie bei der Relativverschwenkung der beiden Schwenkhebel (4a) und (4b) gegeneinander stets aneinander anliegen bleiben.

## Patentansprüche

1. Rasteinrichtung für eine Tisch- und Gehrungssäge mit einem Sägeaggregat, das auf einem um 180°

schwenkbar in einem Traggestell angeordneten Arbeitstisch befestigt ist, dessen Lage durch ein mit ihm formschlüssig zusammenwirkendes, am Traggestell federnd gelagertes Rastteil gesichert ist, das mit Anlaufschrägen für beide Schwenkrichtungen des Arbeitstisches versehen ist, dadurch gekennzeichnet, daß das Rastteil als eine um eine horizontale Achse (3), die im Abstand zur Schwenkachse des Arbeitstisches verläuft, schwenkbar gelagerte Rastklinke (4) mit zwei relativ zueinander bewegbaren Klinkenteilen (4a, 4b) ausgebildet ist, von denen jeder mit einer Anlaufschräge (5, 6) für eine der beiden Schwenkrichtungen (7) bzw. (8) und mit einer dahinterliegenden Rastnut (9) versehen ist, die so gebildet ist, daß die Kante zwischen der Anlaufschräge und der anliegenden Begrenzungswand (10, 10') in Bezug zu einer die Schwenkachse (3) der Klinkenteile (4a, 4b) enthaltenden Vertikal-Ebene einen größeren Abstand aufweist als die gegenüberliegende zweite Kante, wobei die längere Begrenzungswand (10, 10') jeder Rastnut für eine Schwenkrichtung (7) bzw. (8) des Arbeitstisches (1) einen Anschlag für eine Rastkante (14) des Arbeitstisches (1) bildet.

2. Rasteinrichtung nach Anspruch 1, dadurch gekennzeichnet, daß beide Klinkenteile als gleichlange und auf der Achse (3) der Rastklinke gelagerte Schwenkhebel (4a, 4b) ausgebildet sind, die beide federnd abgestützt und über eihen bestimmten Schwenkwinkel unabhängig voneinander schwenkbar sind.

3. Rasteinrichtung nach den Ansprüchen I und 2, dadurch gekennzeichnet, daß beide Schwenkhebel (4a, 4b) mit der Rastnut (9, 9') versehen sind, die jeweils auf gleichen Radien liegt, wobei die Begrenzungswände (10, 10', 11, 11') der beiden Rastnuten (9, 9') jeweils gleich groß, aber entgegengesetzt angeordnet sind.

4. Rasteinrichtung nach Anspruch 3, dadurch gekennzeichnet, daß die den Anlaufschrägen (5, 6) des benachbarten Schwenkhebels (4a, 4b) zugeordneten Randkanten (12, 13) jedes Schwenkhebels in Richtung zur Rastkante (14) des Arbeitstisches (1) hinter den Kanten der Anlaufschrägen liegen.

5. Rasteinrichtung nach einem der Ansprüche 2 bis 4, dadurch gekennzeichnet, daß beide Schwenkhebel (4a, 4b) mit einem Betätigungsorgan (15, 16) verbunden sind, mit dem sie gegen die Federwirkung aus der Raststellung bewegbar sind.

6. Rasteinrichtung nách Anspruch 5, dadurch gekennzeichnet, daß das Betätigungsorgan (15, 16) an einem beide Schwenkhebel (4a, 4b) durchquerenden Bolzen angebracht ist und daß der Bolzen in Langlöcher (18, 18') der Schwenkhebel (4a, 4b) eingreift, die den Federweg bestimmen.

7. Rasteinrichtung nach Anspruch 6, dadurch gekennzeichnet, daß das Betätigungsorgan eine am Bolzen (17) angreifende Zugstange (15) ist.

8. Rasteinrichtung nach Anspruch 6, dadurch gekennzeichnet, daß das Betätigungsorgan als ein Exzenterhebel (16) ausgebildet ist.

9. Rasteinrichtung nach Anspruch 8, dadurch gekennzeichnet, daß der Exzenterhebel (16) seitlich von den Schwenkhebeln (4a, 4b) am Traggestell (2) gelagert und mit einem im gleichen Sinn wie die Schwenkhebel betätigbaren Handgriff (18) versehen ist.

## Claims

1. A locking device for a bench and mitring saw with a saw unit mounted on a work-table disposed in a supporting frame and pivotable through 180°, the position of which is secured by a locking member co-operating with it in form-locking manner and resiliently mounted on the supporting frame, the locking member being provided with run-on ramps for both directions in which the work-bench is adapted to pivot, characterised in that the locking member is a detent (4) mounted to pivot about a horizontal axis (3) extending at a distance from the pivoting axis of the work-bench and having two relatively movable detent parts (4a, 4b), each of which is provided with a run-on ramp (5, 6) for one of the two pivoting directions (7, 8) and behind them a locking groove (9) which is so formed that the edge between the run-on ramp and the adjacent boundary wall (10, 10'), in relation to a vertical plane containing the pivoting axis (3) of the detent parts (4a, 4b), is at a greater distance than the oppositely disposed second edge, the longer boundary wall (10, 10') of each locking groove for one pivoting direction (7 or 8) of the work-bench (1) forming an abutment for a detent edge (14) of the work-bench (1).

2. A locking device according to Claim 1, characterised in that both detent parts are constructed as equally long pivot levers (4a, 4b) mounted on the axis (3) of the locking detent, both being resiliently braced and being pivotable through a specific angle independently of each other.

3. A locking device according to Claims 1 and 2, characterised in that both pivot levers (4a, 4b) are provided with the locking groove (9, 9') which in each case lies on the same radii, the boundary walls (10, 10', 11, 11') of the two locking grooves (9, 9') being in each case of the same size, the walls being however disposed in opposition to each other.

4. A locking device according to Claim 3, characterised in that the marginal edges (12, 13) of each pivot lever, associated with the run-on ramps (5, 6) of the adjacent pivot lever (4a, 4b) lie behind the edges of the run-on ramps when viewed in the direction of the locking edge (14) of the work-bench (1).

5. A locking device according to one of Claims 2 to 4, characterised in that the two pivot levers (4a, 4b) are connected to an actuating member (15, 16) with which they are adapted to be moved against spring action and out of the locking position.

6. A locking device according to Claim 5, characterised in that the actuating member (15, 16) is mounted on a bolt traversing both pivot levers (4a, 4b) and in that the bolt engages elongated holes (18, 18') in the pivot levers (4a, 4b) which determine the spring travel.

7. A locking device according to Claim 6, characterised in that the actuating member is a pull rod (15) engaging the bolt (17).

8. A locking device according to Claim 6, characterised in that the actuating member is constructed as an eccentric lever (16).

9. A locking device according to Claim 8, characterised in that the eccentric lever (16) is mounted on the supporting frame (2) laterally of the pivot levers (4a, 4b) and is provided with a handle (18) adapted for movement in the same direction as the pivot levers.

## Revendications

1. Dispositif d'arrêt pour une scie de table et à onglet avec une scie combinée, qui est fixée sur une table de travail disposée dans un bâtisupport avec possibilité de pivotement de 180°, dont la position est assurée au moyen d'une partie d'arrêt montée élastiquement sur le bâti-support, qui est accouplée avec lui par encastrement de forme, qui est muni de rampes de départ pour les deux directions de la table de travail, caractérisé en ce que la partie d'arrêt est constituée par un cliquet d'arrêt (4) monté pivotant autour d'un axe horizontal (3), qui s'étend à une certaine distance de la table de travail, avec deux parties de cliquet (4a, 4b) mobiles l'une par rapport à l'autre, et dont chacune est pourvue d'une rampe de départ (5, 6) pour une des deux directions de pivotement (7) ou (8) et d'une gorge de crantage (9) disposée à la suite, qui est constituée de telle sorte que le bord entre la rampe de départ et la paroi de délimitation adjacente (10, 10') présente par rapport à un plan vertical contenant l'axe de pivotement des parties de cliquet (4a, 4b) une plus grande distance que le deuxième bord situé en regard, la paroi de délimitation (10, 10') la plus longue de chaque gorge de crantage pour une direction de pivotement (7) ou (8) de la table de travail (1) constituant une butée (1) pour un bord d'arrêt (14) de la table de travail (1).

2. Dispositif d'arrêt selon la revendication 1, caractérisé en ce que les deux parties de cliquet sont constituées par des leviers pivotants (4a, 4b) de même longueur montés sur l'axe (3) du cliquet d'arrêt, qui sont pourvus d'un appui élastique et peuvent basculer indépendamment l'un de l'autre.

3. Dispositif d'arrêt selon les revendications 1 et 2, caractérisé en ce que les deux leviers pivotants (4a, 4b) sont pourvus de la gorge de crantage (9, 9'), qui se trouve sur les mêmes rayons et dont les parois de délimitation (10, 10', 11, 11') des deux gorges de crantage (9, 9') sont respectivement d'égale longueur, mais ont une disposition inversée.

4. Dispositif d'arrêt selon la revendication 3, caractérisé en ce que les rebords (12, 13) de chaque levier pivotant dirigés vers le bord d'arrêt (14) de la table de travail (1), qui sont adjoints aux rampes de départ (5, 6) du levier pivotant voisin (4a, 4b), se trouvent derrière les bords des rampes de départ.

5. Dispositif d'arrêt selon l'une des revendications 2 à 4, caractérisé en ce que les deux leviers pivotants (4a, 4b) sont reliés à un organe de manoeuvre (15, 16), au moyen duquel ils peuvent être déplacés hors de la position de crantage, en opposition avec l'effet du ressort.

6. Dispositif d'arrêt selon la revendication 5, caractérisé en ce que l'organe de manoeuvre (15, 16) est fixé sur un axe traversant les deux leviers pivotants et en ce que cet axe est engagé dans les trous ovales (18, 18') des leviers pivotants qui déterminent la course élastique.

7. Dispositif d'arrêt selon la revendication 6, caractérisé en ce que l'organe de manoeuvre est une tige de traction (15) qui agit sur l'axe (17).

8. Dispositif d'arrêt selon la revendication 6, caractérisé en ce que l'organe de manoeuvre est constitué par un levier à excentrique (16).

9. Dispositif d'arrêt selon la revendication 8, caractérisé en ce que le levier à excentrique (16) est monté sur le bâti-support (2) latéralement par rapport aux leviers pivotants (4a, 4b) et est pourvu d'une poignée (18) actionnable dans le même sens que les leviers pivotants.

# Fig.1

# Fig.2

# Fig.3

# Fig.4

# Fig.5

Fig. 6

Fig. 7